# EUROPEAN PATENT SPECIFICATION

(11) **EP 2 437 927 B1**
(45) Date of publication and mention of the grant of the patent: **10.02.2016**
(21) Application number: 10782849.3
(22) Date of filing: 17.05.2010
(51) Int. Cl.: B29C 70/32, B65H 49/30, B65H 54/58

(54) **FIBER REINFORCED REBAR FORMED INTO A COIL FOR TRANSPORTATION**
IN EINER TRANSPORTSPULE GEFORMTE FASERVERSTÄRKTE BEWEHRUNG
BARRE D'ARMATURE A RENFORT DE FIBRES FORMEE EN UN ROULEAU POUR LE TRANSPORT

(30) Priority: 03.06.2009 CA 2666913
(43) Date of publication of application: 11.04.2012
(73) Proprietor: Brandstrom, Randel, Edmonton, Alberta T6B 3P3 (CA)
(72) Inventor: Brandstrom, Randel, Edmonton, Alberta T6B 3P3 (CA)
(74) Representative: Dempster, Benjamin John Naftel
(86) International application number: PCT/CA2010/000717
(87) International publication number: WO 2010/139045

(56) References cited:
- WO-A1-98/31891
- WO-A1-03/025305
- WO-A1-2008/128314
- CA-A1- 2 396 808
- DE-A1- 2 006 840
- JP-A- S5 337 914
- US-A- 4 048 825
- US-A- 4 620 401
- US-A- 5 632 175
- US-A- 5 843 266

## Description

The present invention relates a method for manufacture of fiber reinforced reinforcing bar or "rebar".

The term "rebar" as used herein is intended to include bars and rods which are hollow, that is tubing. The outside surface is preferably but not necessarily of circular cross section. The rods can be of any length including elements which are relatively short so that they are sometimes referred to as "bolts".

### BACKGROUND OF THE INVENTION

The use of fiber reinforced plastics (FRP) rods in construction, marine, mining and others has been increasing for years. This is because FRP has many benefits, such as non-(chemical or saltwater) corroding, non-metallic (or non-magnetic) and non-conductive, about twice to three times tensile strength and 1/4 weight of steel reinforcing rod, a co-efficient of thermal expansion more compatible with concrete or rock than steel rod. Most of the bars are often produced by pultrusion process and have a linear or uniform profile. Conventional pultrusion process involves drawing a bundle of reinforcing material (e.g., fibers or fiber filaments) from a source thereof, wetting the fibers and impregnating them (preferably with a thermo-settable polymer resin) by passing the reinforcing material through a resin bath in an open tank, pulling the resin-wetted and impregnated bundle through a shaping die to align the fiber bundle and to manipulate it into the proper cross sectional configuration, and curing the resin in a mold while maintaining tension on the filaments. Because the fibers progress completely through the pultrusion process without being cut or chopped, the resulting products generally have exceptionally high tensile strength in the longitudinal direction (i.e., in the direction the fiber filaments are pulled). Exemplary pultrusion techniques are described in U.S. Patent No. 3,793,108 to Goldsworthy; 4,394,338 to Fuwa; 4,445,957 to Harvey; and 5,174,844 to Tong.

FRP uniform profile or linear rods offer several advantages in many industrial applications. The rods are corrosion resistant, and have high tensile strength and weight reduction. In the past, threaded steel rods or bolts had been widely used in engineering practice. However, long-term observations in Sweden of steel bolts grouted with mortar have shown that the quality of the grouting material was insufficient in 50% of the objects and more bolts have suffered from severe corrosion (see reference Hans K. Helfrich). In contrast with the steel bolts, the FRP bolts are corrosion resistant and can be simultaneously used in the temporary support and the final lining, and the construction costs of single lining tunnels with FRP rock bolts are 33% to 50% lower than of tunnels with traditional in-site concrete (see reference Amberg Ingenieurburo AG, Zurich). This FRP rock bolting system is durable and as a part of the final lining supports a structure during its whole life span. Furthermore, due to their seawater corrosion resistance, the FRP bolts and anchors are also proven as good solutions in waterfront (e.g., on-shore or off-shore seawalls) to reinforce the concrete structures. In general the fibreglass rod/bolt is already an important niche, and will be a more important product to the mining and construction industries. The critical needs of these industries are for structural reinforcements that provide long-term reliability that is cost-effective. The savings in repair and maintenance to these industries will be significant, as the composite rebar will last almost indefinitely.

The mining industry requires composite rods for mining shafts or tunnel roof bolts. These rods are usually carried by hand and installed overhead in mining tunnel, so there is a benefit that the fibreglass rod is 1/4 the weight and twice the strength of steel rebar which are widely used currently. Fibreglass rod also does not damage the mining equipment. In construction industries, such as bridges, roads, seawall and building structures, reinforcements using steel rebar have been widely used and most of steel rebars have been corroded after a few years of service fife. Typically, the structures with the steel rebars are often torn down after a period of time. Therefore the use of the corrosion resistant composite rebars have been increased for construction industries in recent years.

Non-uniform profile or non linear threaded rods are also required in many industrial applications. For example, threaded FRP rods and associated nuts have been used as rock bolting system in mining industries (e.g., for tunnel roof bolts), as threaded reinforcing rebar structures in construction industries (e.g., in bridge construction), as well as seawall bolting system in marine structures.

The structures of the threaded composite rods from existing manufacturing technology consist of two styles:
(1) Pultruded rod with machined threads in outside surface, and
(2) Pultruded rod has a core of fiber rovings with plastic materials molded outside the core to form threads.

In style (1), the problem of machining composite rebar surface after it is fully cured is that the fibers in a depth of surface are cut into segments. The benefit of high tensile strength of the fibers are lost when they are cut into short lengths. The strength of the threads now rely on the shear strength of the cured resin which is much less than that of the fibers. Thus, the rebar could not be used under tension since the threads of the rebar will shear away from the core. The rebar uses a specially designed nut that compresses against the rebar to give it holding strength when a load is placed on the rebar. The nut threaded onto the rebar has just enough resistance to take up any slack between the nut and the thread surface. Therefore the nut is used without pre-tension.

In style (2), the rebar has a core of fiber glass rovings and a plastics molded threads surface. This rebar is only capable of withstanding a small amount of longitudinal loads. This is because the threads formed by the molded plastics lack the fiber glass reinforcements for having the longitudinal strength. Other rebars, such as those shown in a brochure by Marshall Industries Composites Inc C-BAR 1996, are a combination of a fiber-reinforced polyester core and a urethane-modified vinyl ester outer skin, which do not include the thread features in rebar surface.

WO-A-03/025305 relates to carbon fiber reinforcement elements for concrete.

WO 98/31891 A1 relates to coiling reinforcing bars with glassfiber and thermoplastic resin.

WO 2008/128314 A1 discloses a method of supplying reinforcing bar according to the preamble of claim 1.

### SUMMARY OF THE INVENTION

It is one object of the present invention to provide a method for forming and transporting reinforcing bar formed from fiber reinforced resin.

According to a first aspect of the invention there is provided a method according to claim 1.

Preferably the resin is exposed on the outside surfaces of the inner rovings and the wrapped rovings.

Preferably the outside surface portion is free from bonded exterior roughening elements attached onto the outside surface of the resin.

Preferably the diameter of the bar is in the range 9.5 mm (0.375 inch) up to 32 mm (1.25 inch) and more preferably in the range 13 mm (0.5 inch) or 19 mm (0.75) up to 32 mm (1.25 inch). Rebar up to 25 mm (1.00 inch) is common and can be coiled in the present invention. Rebar up to 32 mm (1.25 inch) is also used.

Preferably the resin is a Vinyl ester resin but other resins can be used.

Preferably the rovings are formed from E glass but other glass reinforcements can be used.

Preferably the number of wraps of the at least one wrapping is such that a spacing between wraps is in the range 0.04 to 0.08 wraps/mm (1.0 to 2.0 wraps /inch) so as to hold the bar against damage due to torsional bending.

Preferably the ratio of resin to rovings is such that the content of fibers is of the order of 70% by weight, but other ratios can be used.

Preferably the bar has a low modulus of elasticity which is typically less than 50.

Preferably the bar is coiled in a winder onto an inside surface of a support structure.

Preferably the support structure comprises a series of posts arranged in a circle around the axis with the posts parallel to the axis. However other frame structures can be used.

Preferably the bar is fed by a guide into the interior of the support structure and acts to rotate the support structure around the axis by forwarding motion of the bar into the interior.

Preferably the support structure is removed after holding strappings are applied to the coil. This can be done where the frame is formed by a series of posts around the axis by arranging the posts to be held in place by top bars which are removed allowing the posts to be moved away from the coil.

Preferably a similar support structure is provided at the remote location for holding the coil while the bar is pulled from the coil.

The following aspects of the bar can be provided to allow coiling in a tight radius which is sufficiently small to allow transportation of the coils:
- A low stiffness bar requires less force to bend (low modulus of elasticity).
- The properties of the resin allow enough elongation not to compromise the properties of the bar.
- The winding configuration designed to keep the fibers together in a bundle.
- To prevent fibers from splitting (bird cage effect) as it is unspooled, the windings also allow for torsion on the bar with no damage.

It should be noted that composite rebar does not plastically deform so that once it is again uncoiled, it remains perfectly straight. The rebar selected preferably has a modulus of elasticity which is 4 to 5 times lower than that of steel. Steel is typically close to 207 GPa so that a selection of the parameters of the rebar to generate a modulus around or below 50 GPa is preferred. Modulus of Elasticity is a standard measure of such rebar and is measured by standard laboratory techniques. The use of rebar with a higher modulus provides a stiffer bar which is harder to coil.

The dimensions of the coil are determined by the maximum diameter which can be shipped and by the minimum diameter to which the material can be coiled. Thus typically a maximum coil radius of 2.7 m (9 feet) or 5.5 m (18 feet) diameter can be used in some shipping orientations where a wide load is allowed and the coil is shipped in an inclined orientation from close to ground level at one side of the vehicle to the maximum height allowed at the other side of the vehicle. Thus the OD is limited by shipping requirements and the ID limited by material properties. For a 3.7 m (12 foot) coil, the coils can be transported in the vertical position on a coil. Multiple coils can be transported side by side on a truck (up to 18,000 kg (40,000 lbs)).

Using conventional shipping methods where the rebar is shipped in straight bars cut to length, a bar length over 16 m (53 feet) requires special permits and in some cases a tandem trailer arrangement is used for transportation which is not allowed in some states and provinces. Thus transportation costs are significantly greater for long lengths when shipped in the conventional manner.

Typically a coil holds multiple wraps and layers of the order of 300 wraps or so of the bar which can be up to 3 km (10 000 feet) of bar on each coil. Such coils can weigh more than 2300 kg (5000 pounds) allowing the truck to be loaded to its maximum weight.

For transportation after winding is complete there are three alternatives:
- The coil can be wrapped with suitable strapping and released from the winder. It is later on placed in the unwinder of a similar construction to the winder.
- The coil is retained in the winder and the whole winder with the bar is transported to the remote location for use. That is the same winder is for coiling and uncoiling.
- A magazine is located inside the coil for transportation and is released out of the winder to hold the rebar in place for shipping.
- At the remote use location, the coil can be unwound manually or by an unwinding mechanism from the internal coil radius.

When the coil is removed from the winding frame, the top bars holding the array of posts are removable and each vertical post is movable for example on a hinge. This allows removal of the rebar bundle once it is wound and tied up for shipping without the winder actually being transported. A similar winder is supplied for the customer and typically the winder comes apart and can be shipped easily. The customer places the coil in the winder, closes the winder, bolts the bars back on the top and cuts of the shipping straps.

During winding the rebar can be pushed into the coil or pulled in. That is the winder can have a motor to drive rotation of the winder which acts to provide the winding force or reduces the pushing force from the rebar when the coil becomes heavy.

### BRIEF DESCRIPTION OF THE DRAWINGS

Figure 1 is a side elevational view of a portion of a reinforcing bar according to the present invention.
Figure 2 is a cross sectional view along the lines 2-2 of Figure 1.
Figure 3 is a cross sectional view similar to that of Figure 2 on an enlarged scale.
Figure 4 is a cross sectional view along the lines 4-4 of Figure 1.
Figure 5 is an isometric view of a winding device for coiling the reinforcing bar of Figures 1 to 4.
Figure 6 is a top plan view of the winding device of Figure 5.
Figure 7 is a side elevational view of the winding device of Figure 5 showing the coiled bar in place for removal of the coil from the winding device.

### DETAILED DESCRIPTION OF THE INVENTION

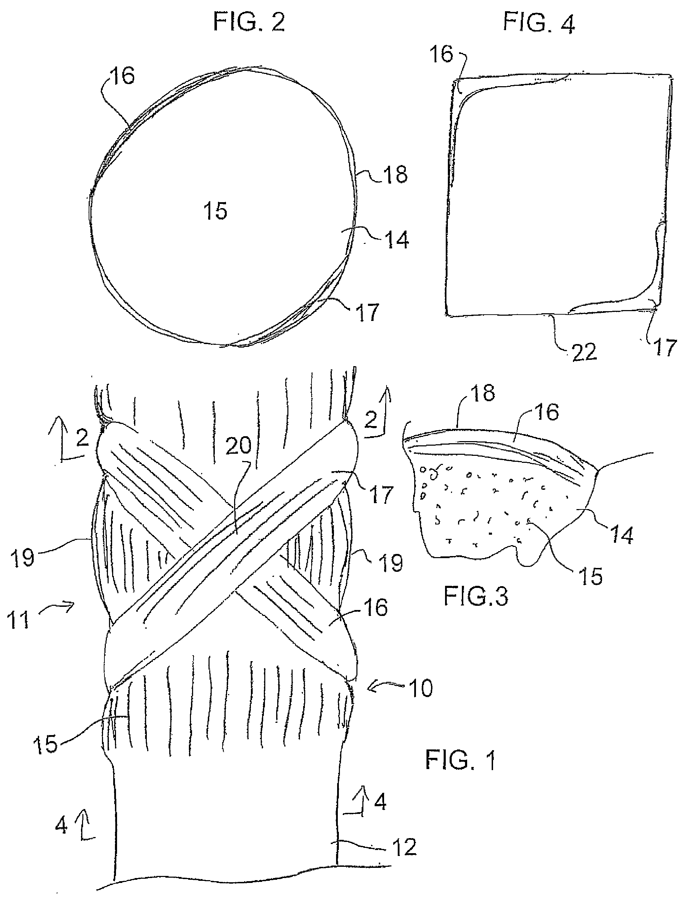

In Figure 1 is shown a reinforcing bar generally indicated at 10 which has a first section 11 extending along most of the length of the bar together with a second section 12 which extends a part of the length of the bar. The bar is generally formed in continuous construction so that the first and second sections are repeated alternately. The length of the second section generally will comprise only a short portion relative to the length of the main section 1 so that for example the main section may be 12 feet long and the second section only 6" long.

The reinforcing bar is formed solely from a resin material 14 which is permeated through to sections of reinforcing fibers including longitudinal reinforcing fibers 15 and wrapping reinforcing fiber 16, 17.

The longitudinal reinforcing fibers 15 constitute the main volume of the structure so that typically the fiber content may be constituted as longitudinal fibers 90 to 97% and wrapping fibers 3 to 10 %, where the resin content can be of the order of 20 to 30 % by weight.

The structure in the area of the portion 11 is formed without any compression of any of the fibers by a pultrusion process. Thus neither the inner core formed by the longitudinal fibers 15 nor the outer wrapping 16 and 17 pass through a die structure so that they are free to take up their positions as determined by the tensions in the material when formed.

The resin is a thermosetting resin which is heated by any one of a number of available heating techniques. Thus the heat is applied to the structure to effect curing of the resin without contact by the heating device on the structure. In this way the fibers in the first section 11 are free to take up their position depending upon their tension and they take up a position within the resin so that the resin extends both through the longitudinal fibers and the wrapping fibers.

In order to obtain this situation where the resin 14 extends outwardly to the outer surface 18 and permeates through all of the fibers, the longitudinal fibers and the wrapping fibers are both preferably wetted preferably using a bath or dipping process so that the fibers are fully enveloped with the resin prior to entry into the forming system generally described above.

The wetting of the fibers ensures that the resin permeates through the whole structure of the outside surface 18.

The absence of any compression by the provision of any form of die through which the core of longitudinal fibers passes ensures that the wrapping fibers 16 and 17 apply pressure onto those parts of the longitudinal fibers which are contacted by the wrapping fibers squeezing those longitudinal fibers inwardly and causing bulging of the longitudinal fibers in the sections 19. Thus between each wrapped strip of fibers there is a portion of the longitudinal fibers which is squeezed and bulged outwardly so that it projects to a position which is preferably slightly proud of the outside surface of the wrapping fibers.

The wrapping fibers are of course spaced in the longitudinal direction by a helical wrapping action so that the width of the wrapping fibers is less than the width of the bulged intermediate sections 19.

Typically the wrapping fibers in each direction can be spaced of the order of 1 to 3 to the inch. However a wider or lesser spacing may be used provided the longitudinal fiber are properly controlled and provided there is enough space to ensure bulging between the wraps.

The wrapping fibers may be wrapped as a single roving in a single start wrapping process or as multiple rovings applied in a multi-start wrapping process. In such a multi start process the number of rovings side by side may be in the range 3 to 10. The number of rovings or the thickness of the roving at the wrapping position may vary depending on the diameter of the core.

The wrapping action occurs in both directions so that the wrapping fibers overlap one another as they cross as shown for example at 20. In this way the bulged sections are generally diamond shape in front elevation and are squeezed at the top and bottom by the wrapping action of the wrapping fibers. Thus the bulging sections 19 are individual and separated by the wrapping fibers and yet the longitudinal fibers are properly contained and held into the structure by the wrapping at top and bottom of the bulging sections.

The provision of the wrapping or wrappings symmetrically in both directions tends to contain and locate the inner longitudinal rovings and maintain them in the longitudinal direction even when tension is applied. Thus the full strength of the longitudinal fibers in the longitudinal direction is maintained and is not reduced or compromised by any tendency of the longitudinal fibers to twist. Any such twisting of the longitudinal fibers can significantly reduce strength by applying loads sequentially to different fibers leading to sequential failure. In addition the wrappings in opposite directions accommodate torque applied to the rod in both directions.

The bulging sections 19 are thus presented on the outside surface 18 for engagement with material within which the bar is embedded. Thus if the material to be reinforced is concrete, the concrete sets around the reinforcing bar and engages the bulging sections 19. Longitudinal loads from the concrete to the reinforcing bar are therefore transferred to the bulging sections 19 and not only to the wrapping section 16 and 17. The wrapping sections because of their angle to the longitudinal direction have less ability to accommodate longitudinal tension than do the longitudinal fibers which are longitudinal and continuous. Thus transferring the loads in the longitudinal direction to the bulged sections 19 ensures that the loads are transferred into the longitudinal fibers and avoid transference to elements which can be moved longitudinally or stripped from the outside surface 18. The bulge sections 19 cannot of course move longitudinally since they are part of longitudinal fibers.

Yet the outside surface thus can be free from additional bonded projecting elements such as grit or sand which is commonly applied to the outside surface of such reinforcing bars.

The fact that the resin is permeated throughout both the longitudinal fibers and the wrapping fibers to the outside surface 18 ensures that the wrapping fibers are bonded effectively into the structure.

The second section 12 is formed periodically along the bar as it is formed by clamping the portion of the bar within a clamping die. The clamping die may move with the structure as it moves forwardly or the movement could be halted while the clamping action occurs and the curing occurs in the clamped position. Generally the formation of the clamped section occurs before the remainder of the bar moves into the heating section to complete the curing action. The clamping die has an inside surface which is shaped to a polygonal shape such as square and squeezes both the wrapping fibers and the longitudinal fibers to form them into the required outer shape 22 as shown in Figure 4. The clamping action squeezes the fibers together and may reduce the cross sectional area due to squeezing of the resin from the structure. The longitudinal fibers extend through the clamp section and also the wrapping fibers extend through the clamp section as shown in Figure 4. Thus the wrapping fibers in both directions of wrap are clamped into the structure at the polygonal second section 12.

As an alternative to the polygonal shape, any other non-circular shape may be used such as a compressed flat shape.

As a further alternative the rough rebar may be formed with a hole through the fibers to provide a connection for an anchor.

The second section 12 is thus shaped so that the bar can be grasped by a chuck or other clamping element so that the bar can be rotated around its axis during insulation of the bar in particular circumstances. The wrapping of the fibers 16 and 17 ensures that rotation at the second section 12 is transmitted into torque throughout the length of the bar by those wrapped section 16 and 17.

In one example of use of an arrangement of this type, the bar can be inserted into a drilled hole in rock in a mining situation and the drilled hole filled with a suitable resin. The stirring action in the resin caused by the rotation of the bar grasping the second section 12 and rotating the first section 11 causes the resin to be spread through the hole around the periphery in an effective stirring action caused by the bulged sections 19. Thus the bar can be bonded into place within the drilled hole to act as reinforcement for mining structures at for example the roof area of a mine.

In another alternative use of reinforcing bars of this type, a drill tip can be attached at one section 12 and the bar grasped at another section 12 allowing the bar to be rotated with the drill tip causing a drilling action driving the bar directly into a drilled hole while the bar causes the drilling of the hole. The bar can then remain in place and the drill tip selected to be of a sufficiently disposable type so that it can be discarded within the hole.

Again the direct connection between the polygonal section 12 and the main portion of the bar caused by the presence of the wrapping fibers 16 and 17 within the resin allows the transfer of loads between the polygonal section and the main section 11.

The arrangement described herein has been found to be significantly advantageous in that it provides an improved embedment strength which is a factor used in calculating parameters for reinforcing bars in concrete. Thus the shape of the outer surface (wrappings in both directions, bulging of the longitudinal strands) provides a higher degree of attachment with the adhering material (concrete or epoxy resin). This higher mechanical bond translates into a high embedment strength.

The arrangement described herein has been found to be significantly advantageous in that it provides an improved control of crack width. Measurement of crack width is another factor used in calculating parameters for reinforcing bars in concrete with the intention of maintaining a low crack width factor. When designing for crack control reinforcement, the nature of this product and its high embedment strength will allow for a smaller bond dependant co-efficient to be used (for example, sand coated bars use 0.8, and a smooth pultruded bar would be higher). A lower bond dependant co-efficient translates into smaller crack widths, or less reinforcement required for the same crack width.

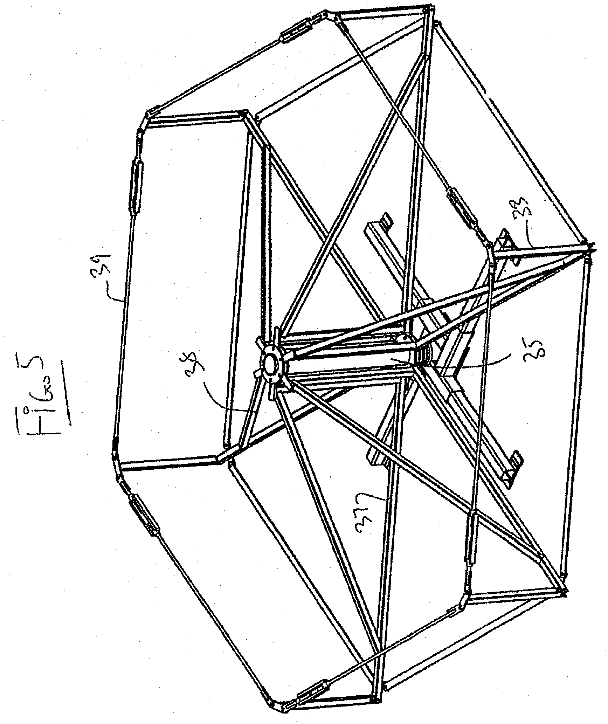

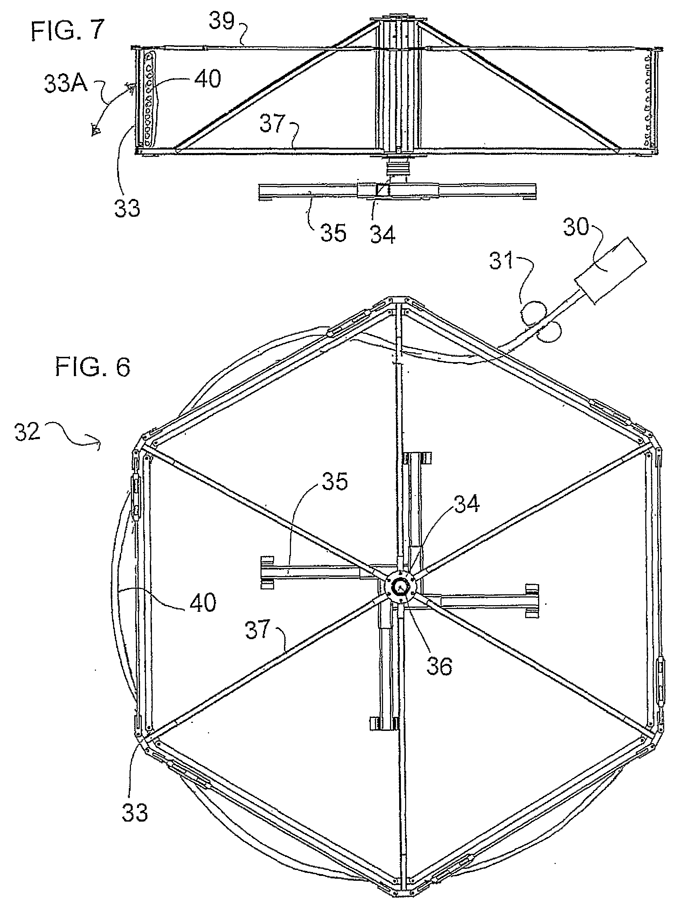

Turning now to Figures 5 to 7, there is shown a method of supplying the reinforcing bar as described above and a winding device for use in the method. Thus the pultrusion method is indicated schematically at 30 and uses the systems and constructions well known to persons skilled in the art and as more particularly described above.

The reinforcing bar after setting in the pultrusion system is pulled by a pulling system 31 shown schematically as a pair of rollers but other constructions can be used.

The bar is then forwarded into a winding frame 32 formed by a central hub 34 carried on a base 35 for rotation of the hub 34 about an axis 36. The hub carries a plurality of arms 37 and braces 38 for those arms which extend radially outwardly from the axis with each carrying an upstanding post 33 at its outer extremity with the posts parallel to each other and to the axis 36. Preferably the axis 36 is vertical so that the posts are vertical, but other orientations can be used.

The posts are held vertical by to bars 39 which can be released to allow the posts to fold outwardly as shown at 33A.

The formed bar is thus coiled around the axis 36 to form a coil 40 of the bar wrapped a series of times around the axis 36 which is at right angles to the length of the bar.

The posts 33 act as holding members to hold the bar in the coil with the coil being free between the posts so as to take up a circle defined by the circle on which the posts lie, due to the high bending resistance of the bar.

When the winding is complete of sufficient bar to form a coil of a required weight and total expansion force less than the maximum which can be accommodated by the winding frame, coil is wrapped by suitable strapping to hold the coil in place with the frame removed. Thus the posts 33 can be folded outwardly with the coil in place on the arms to free the coil to be removed and transported to a remote location for use.

The turns of the coil are not necessarily helical and the wrapping may be random. However it may be desirable to move the rollers 31 vertically to provide a more accurate and consistent lay down of the turns of the coil. The number of turns may be such that there is a single layer of the coils or more turns may be applied so that there are inner turns applied over the turns in contact with the posts.

Typically the guide is traversed vertically to lay the turns side by side with the number of layers being selected up to a required length of weight or until the diameter is reached where the rebar can no longer tolerate the curvature necessary.

As an alternative to mounting the winding frame on a hub, an exterior holder can be provide which defines an outer bearing for rotating the frame such as an outer set of rollers. The frame can be formed by a continuous sheet of material defining a ring which sits in an exterior bearing arrangement.

The cross sectional shape of the frame can be cylindrical which provides the maximum amount of rebar which can be coiled at the outermost diameter. Alternatively the shape may be V-shaped or U-shaped or semi-circular so as to better guide the lay down of the turns of the rebar as they move to the maximum available diameter under the high forces which are provided by the elastic effect of the rebar wanting to return to the straight condition.

In some cases a guide arm can be provide to lead the rebar onto the inner surface of the frame to ensure accurate lay down of the turns in layers.

After the transportation, at the remote location, the bar is pulled from the coil and cut to a required length less than the length of the coil. A similar support structure is provided at the remote location for holding the coil while the bar is pulled from the coil. That is a frame 32 is provides also at the remote location and the supplied coil is dropped onto the frame with the posts in the lowered position 33A. With the posts raised and secured, the wrapping of the coil is removed and the coil is allowed to open onto the posts. It can them be pulled from the frame by a symmetrical unwinding guide similar to the guide 31 so that the bar can be pulled to a required length and cut.

## Claims

1. A method of supplying reinforcing bar comprising:
forming the reinforcing bar (10) from rovings of reinforcing fibers (15) arranged generally longitudinal to the bar and a thermosetting resin (14) permeated through the rovings to form a structure integrated by the permeated resin;
wherein the step of forming the reinforcing bar includes providing a series of inner rovings of glass reinforcing fibers (15) arranged longitudinal to the bar, providing a first helical wrapping or wrappings (16, 17) of at least one glass roving wrapped around the inner rovings in a first direction of wrapping, and providing a second helical wrapping or wrappings (16, 17) of at least one glass roving wrapped around the inner rovings in a second opposed direction of wrapping with the resin being permeated through both the inner rovings and through the wrappings to form a structure integrated by the permeated resin;
wherein the bar has an outer surface portion (18) which extends along at least most of the length of the bar and at the outer surface portion, the inner rovings have parts (19) thereof between the first and second wrapping or wrappings exposed and bulged outwardly by tension applied by the wrapping or wrappings during curing, the bulged parts defining components of the outer surface portion of the bar which are thus rough and exposed for engaging a material to be reinforced so as to transfer longitudinal loads between the material to be reinforced and the inner rovings;
and wherein, at the outer surface portion, the thermosetting resin is cured while the inner and wrapped rovings are free from external pressure such that the shape of the outer surface is defined solely by the shape of the inner and wrapped rovings as the resin is cured,
**characterized in that** the method further comprises:
coiling the formed bar to form a coil (40) of the bar wrapped a series of times around an axis at right angles to the length of the bar to a radius of curvature less than 2.1 m (7 feet) with no damage;
applying holding members (33) to hold the bar in the coil;
transporting the coil of the bar to a remote location;
at the remote location, removing the bar from the coil and cutting the bar to a required length less than the length of the coil.

2. The method according to Claim 1 wherein the resin is exposed on the outside surfaces of the inner rovings and the wrapped rovings.

3. The method according to Claim 1 or 2 wherein the outside surface portion is free from bonded exterior roughening elements attached onto the outside surface of the resin.

4. The method according to any one of Claims 1 to 3 wherein the diameter of the bar is in the range 9.52mm (0.375 inch) up to 38mm (1.5 inch), optionally wherein the diameter of the bar is in the range 13mm (0.5 inch) up to 38mm (1.5 inch) preferably wherein the diameter of the bar is in the range 19mm (0.75 inch) up to 38mm (1.5 inch).

5. The method according to any one of Claims 1 to 4 wherein the resin is a Vinyl ester resin.

6. The method according to any one of Claims 1 to 8 wherein the number of wraps of the at least one wrapping is such that a spacing between wraps is in the range 0.04 to 0.08 wraps/mm (1.0 to 2.0 wraps /inch).

7. The method according to any one of Claims 1 to 6 wherein the bar has a modulus of elasticity which is less than 50 GPa.

8. The method according to any one of Claims 1 to 7 wherein the bar is coiled in a winder onto an inside surface of a support structure.

9. The method according to Claim 8 wherein the support structure comprises a series of posts arranged in a circle around the axis with the posts parallel to the axis.

10. The method according to Claim 8 wherein the bar is fed by a guide into the interior of the support structure and the support structure is rotated around the axis at least in part by forwarding motion of the bar into the interior.

11. The method according to claim 8 wherein the support structure is removed after holding strappings are applied to the coil and a similar support structure is provided at the remote location for holding the coil while the bar is pulled from the coil or wherein the coil is transported with the support structure in place holding the coil in position or wherein the coil is supported by an internal holder member for transportation.

## Patentansprüche

1. Ein Verfahren zum Bereitstellen eines Bewehrungsstabs, umfassend:
Bilden des Bewehrungsstabs (10) aus Fasersträngen aus Verstärkungsfasern (15), die im Wesentlichen längs zu dem Stab angeordnet sind, und einem wärmehärtenden Harz (14),
das durch die Faserstränge permeiert ist, um eine Struktur zu bilden, die mittels des permeierten Harzes kombiniert ist,
wobei der Schritt des Bildens des Bewehrungsstabs das Bereitstellen einer Reihe von inneren Fasersträngen aus Verstärkungsfasern (15) aus Glas umfasst,
die längs zu dem Stab angeordnet werden, das Bereitstellen einer ersten spiralförmigen Umhüllung oder Umhüllungen (16, 17)
aus zumindest einem Glasfaserstrang, der um die inneren Faserstränge in einer ersten Richtung des Umhüllens gewickelt wird, und das Bereitstellen einer zweiten spiralförmigen Umhüllung oder Umhüllungen (16, 17)
aus zumindest einem Glasfaserstrang, der um die inneren Faserstränge in einer zweiten entgegengesetzten Richtung des Umhüllens gewickelt wird, wobei das Harz sowohl durch die inneren Faserstränge als auch durch die Umhüllungen permeiert ist, um eine Struktur zu bilden, die mittels des permeierten Harzes kombiniert ist,
wobei der Stab einen äußeren Oberflächenabschnitt (18) aufweist, der sich entlang zumindest
des größten Teils der Länge des Stabs erstreckt, und wobei die inneren Faserstränge an dem äußeren Oberflächenabschnitt zwischen der ersten und zweiten Umhüllung oder Umhüllungen Teile (19) davon aufweisen, die freigelegt und mittels Spannung nach außen vorgewölbt sind, die durch die Umhüllung oder Umhüllungen während des Aushärtens ausgeübt wird, wobei die vorgewölbten Teile Komponenten des äußeren Oberflächenabschnitts des Stabs definieren, die daher rau und freigelegt für einen Eingriff mit einem zu verstärkenden Material sind, um Lasten in Längsrichtung zwischen dem zu verstärkenden Material und den inneren Fasersträngen zu transferieren,
und wobei das wärmehärtende Harz an dem äußeren Oberflächenabschnitt aushärtet, während die inneren und gewickelten Faserstränge frei von externem Druck sind, so dass die Form der äußeren Oberfläche lediglich durch die Form der inneren und gewickelten Faserstränge definiert wird, wenn das Harz ausgehärtet ist,
**dadurch gekennzeichnet, dass** das Verfahren weiter umfasst:
Aufspulen des gebildeten Stabs, um eine Spule (40) aus dem Stab zu bilden, der eine Reihe von Malen um eine Achse in rechten Winkeln zu der Länge des Stabs mit einem Krümmungsradius von weniger als 2,1 m (7 Fuß) ohne Beschädigung gewickelt wird,
Anbringen von Haltelementen (33) zum Halten des Stabs in der Spule,
Transportieren der Spule aus dem Stab zu einem entfernten Ort, und
Entfernen des Stabs aus der Spule und Schneiden des Stabs auf eine erforderliche Länge, die weniger als die Länge der Spule beträgt, an dem entfernten Ort.

2. Das Verfahren nach Anspruch 1, wobei das Harz an den äußeren Oberflächen der inneren Faserstränge und der gewickelten Faserstränge freigelegt ist.

3. Das Verfahren nach Anspruchs 1 oder 2, wobei der äußere Oberflächenabschnitt frei von verbundenen äußeren Aufrauelementen ist, die an der äußeren Oberfläche des Harzes befestigt sind.

4. Das Verfahren nach einem der Ansprüche 1 bis 3, wobei der Durchmesser des Stabs in dem Bereich von 9,52 mm (0,375 Inch) bis zu 38 mm (1,5 Inch) liegt, wobei der Durchmesser des Stabs optional in dem Bereich von 13 mm (0,5 Inch) bis zu 38 mm (1,5 Inch) liegt, wobei der Durchmesser des Stabs vorzugsweise in dem Bereich von 19 mm (0,75 Inch) bis zu 38 mm (1,5 Inch) liegt.

5. Das Verfahren nach einem der Ansprüche 1 bis 4, wobei das Harz ein Vinylesterharz ist.

6. Das Verfahren nach einem der Ansprüche 1 bis 8, wobei die Anzahl an Wicklungen der zumindest einen Umhüllung derart ist, dass ein Zwischenraum zwischen Wicklungen in dem Bereich von 0,04 bis 0,08 Wicklungen/mm (1,0 bis 2,0 Wicklungen/Inch) liegt.

7. Das Verfahren nach einem der Ansprüche 1 bis 6, wobei der Stab einen Elastizitätsmodul aufweist, der weniger als 50 GPa beträgt.

8. Das Verfahren nach einem der Ansprüche 1 bis 7, wobei der Stab in einem Spuler auf eine innere Oberfläche einer Tragstruktur aufgespult wird.

9. Das Verfahren nach Anspruch 8, wobei die Tragstruktur eine Reihe von Pfosten aufweist, die in einem Kreis um die Achse mit den Pfosten parallel zu der Achse angeordnet sind.

10. Das Verfahren nach Anspruch 8, wobei der Stab mittels einer Führung in das Innere der Tragstruktur geführt wird und die Tragstruktur um die Achse zumindest teilweise durch eine Vorwärtsbewegung des Stabs in das Innere gedreht wird.

11. Das Verfahren nach Anspruch 8, wobei die Tragstruktur entfernt wird, nachdem Haltestreifen an der Spule befestigt sind, und eine gleichartige Tragstruktur an dem entfernten Ort zum Halten der Spule bereitgestellt wird, während der Stab von der Spule gezogen wird, oder wobei die Spule mit der vorhandenen Tragstruktur transportiert wird, die die Spule in Position hält, oder wobei die Spule durch ein internes Halteelement für einen Transport gestützt wird.

## Revendications

1. Méthode de fourniture d'une barre de renfort comprenant les étapes consistant à :
former la barre de renfort (10) à partir de tissus de fibres de renfort (15) disposés de façon généralement longitudinale par rapport à la barre et d'une résine thermodurcissable (14) imprégnée au travers des tissus pour former une structure intégrée par la résine imprégnée ;
dans laquelle l'étape de formage de la barre de renfort inclut la mise à disposition d'une série de tissus intérieurs de fibres de verre de renfort (15) disposés longitudinalement par rapport à la barre, la mise à disposition d'un/de premier(s) enroulement(s) hélicoïdal/hélicoïdaux (16, 17) d'au moins un tissu de verre enroulé autour des tissus intérieurs dans une première direction d'enroulement, et la mise à disposition d'un/de second(s) enroulement(s) hélicoïdal/hélicoïdaux (16, 17) d'au moins un tissu de verre enroulé autour des tissus intérieurs dans une seconde direction d'enroulement opposée, la résine étant imprégnée tant au travers des tissus intérieurs qu'au travers des enroulements pour former une structure intégrée par la résine imprégnée ;
dans laquelle la barre a une portion de surface extérieure (18) qui s'étend le long de l'essentiel, au moins, de la longueur de la barre et sur la portion de surface extérieure, les tissus intérieurs ont des parties (19) de celle-ci entre le (s) premier(s) et le(s) second(s) enroulement(s) exposées et bombées vers l'extérieur par la tension appliquée par l'/les enroulement(s) pendant le durcissement, les parties bombées définissant des composants de la portion de surface extérieure de la barre qui sont ainsi bruts et exposés pour engager un matériau devant être renforcé de façon à transférer les charges longitudinales entre le matériau devant être renforcé et les tissus intérieurs ;
et dans laquelle, sur la portion de surface extérieure, la résine thermodurcissable est durcie pendant que les tissus intérieurs et enroulés sont libres de toute pression extérieure de façon à ce que la forme de la surface extérieure soit définie uniquement par la forme des tissus intérieurs et enroulés à mesure que la résine durcit,
**caractérisée en ce que** la méthode comprend en outre :
l'enroulement de la barre formée pour former un rouleau (40) de la barre enroulée une série de fois autour d'un axe à angles droits par rapport à la longueur de la barre avec un rayon de courbure de moins de 2,1 m (7 pieds) sans détérioration ;
l'application de membrures de maintien (33) pour maintenir la barre dans le rouleau ;
le transport du rouleau de la barre vers un emplacement distant ;
dans l'emplacement distant, le retrait de la barre du rouleau et la coupe de la barre à une longueur requise inférieure à la longueur du rouleau.

2. Méthode selon la revendication 1 dans laquelle la résine est exposée sur les surfaces extérieures des tissus intérieurs et des tissus enroulés.

3. Méthode selon la revendication 1 ou 2 dans laquelle la portion de surface extérieure est libre d'éléments bruts extérieurs liés attachés sur la surface extérieure de la résine.

4. Méthode selon l'une quelconque des revendications 1 à 3 dans laquelle le diamètre de la barre se situe dans la plage de 9,52 mm (0,375 pouce) jusqu'à 38 mm (1,5 pouce), dans laquelle le diamètre de la barre se situe en option dans la plage de 13 mm (0,5 pouce) jusqu'à 38 mm (1,5 pouce), de préférence dans laquelle le diamètre de la barre se situe dans la plage de 19 mm (0,75 pouce) jusqu'à 38 mm (1,5 pouce).

5. Méthode selon l'une quelconque des revendications 1 à 4 dans laquelle la résine est une résine de vinyle ester.

6. Méthode selon l'une quelconque des revendications 1 à 8 dans laquelle le nombre d'enroulements de l'enroulement au nombre d'au moins un est tel qu'un espacement entre les enroulements se situe dans la plage de 0,04 à 0,08 enroulements/mm (1,0 à 2,0 enroulements/pouce).

7. Méthode selon l'une quelconque des revendications 1 à 6 dans laquelle la barre a un module d'élasticité qui est inférieur à 50 Gpa.

8. Méthode selon l'une quelconque des revendications 1 à 7 dans laquelle la barre est enroulée dans un enrouleur sur une surface intérieure d'une structure de support.

9. Méthode selon la revendication 8 dans laquelle la structure de support comprend une série de mâts disposés en cercle autour de l'axe, les mâts étant parallèles à l'axe.

10. Méthode selon la revendication 8 dans laquelle la barre est introduite par un guide dans l'intérieur de la structure de support et la structure de support est mise en rotation autour de l'axe au moins en partie en transmettant le mouvement de la barre dans l'intérieur.

11. Méthode selon la revendication 8 dans laquelle la structure de support est retirée après que des bandes de maintien sont appliquées sur le rouleau et qu'une structure de support similaire est mise à disposition dans l'emplacement distant pour maintenir le rouleau pendant que la barre est tirée du rouleau ou dans laquelle le rouleau est transporté avec la structure de support en place maintenant le rouleau en position ou dans laquelle le rouleau est supporté par une membrure de maintien interne pour le transport.
